# EUROPEAN PATENT APPLICATION

(11) **EP 1 049 345 A1**
(43) Date of publication of application: **02.11.2000**
(21) Application number: 99303287.9
(22) Date of filing: 27.04.1999
(51) Int. Cl.: H04Q 7/30

(54) **Base station equipment for a mobile telecommunications system**

(71) Applicant: LUCENT TECHNOLOGIES INC., Murray Hill, New Jersey 07974-0636 (US)
(72) Inventor: Messenger, Michael Peter, Stroud, Gloucestershire GL6 8QN (GB); Patterson, Geoffrey, Cirencester, Gloucestershire GL7 1RB (GB)
(74) Representative: Williams, David John

(57) **Abstract**

Base station equipment is disclosed for a mobile telecommunications system. An enclosure contains a radio transmitter, a radio receiver, and a processor for communicating with mobile terminals via the transmitter and receiver, and with a switching centre via a data link. A connector interface is separate as a unit from the processor. The interface has one or more connectors for connection to the data link, and conductive connections to the processor.

## Description

This invention relates to base station equipment for a mobile telecommunications network.

In accordance with the invention there is provided base station equipment for a mobile telecommunications system, comprising an enclosure containing a radio transmitter, a radio receiver, and a processor for communicating with mobile terminals via the transmitter and receiver, and with a switching centre via a data link; a connector interface being provided as a unit separate from the processor, said interface having one or more connectors for connection to the data link, and conductive connections to the processor.

Conventionally, the interface would be unitary with the processor, thus components of the interface would be mounted on a common circuit board with components of the processor.

Preferably, the interface includes high voltage surge protection means between the connector(s) and the conductive connections to the processor.

The interface may include low voltage surge protection means between the connector(s) and the conductive connections to the processor.

In a preferred form, the interface includes filter means between the connector(s) and the conductive connections to the processor.

The interface preferably includes electrical isolation means between the connector(s) and the conductive connections to the processor.

The interface may include voltage clamping means between the isolation means and the conductive connections to the processor.

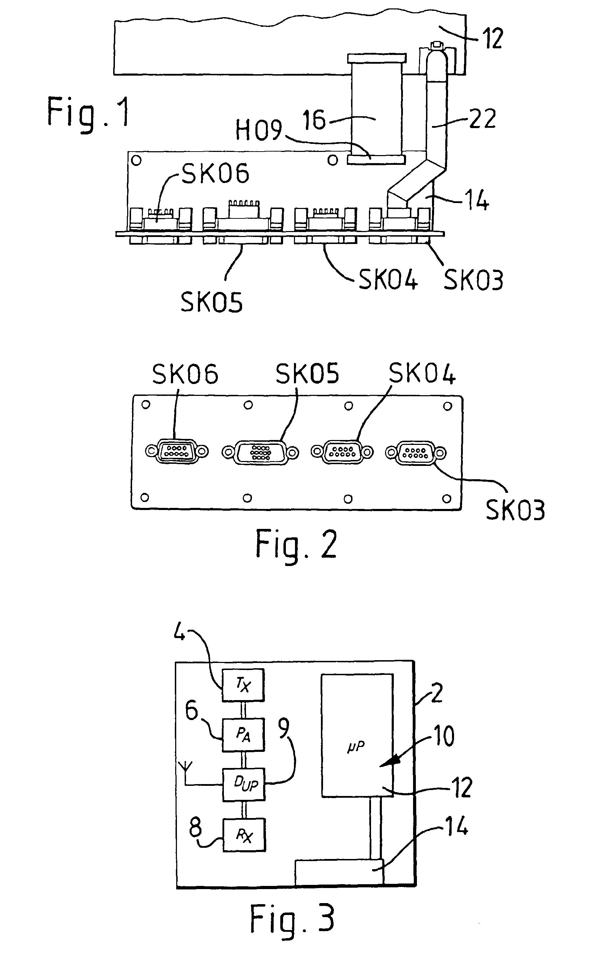

Figure 1 is a plan view of an interface unit and a processor board of base station radio unit embodying the invention;
Figure 2 is an end view of the interface unit of Figure 1;
Figure 3 is a block diagram of the radio unit;
Figure 4 is a schematic diagram of an adapter for use with the interface adapter of Figure 1;
Figure 5 is a pictorial view of the adapter of Figure 2; and

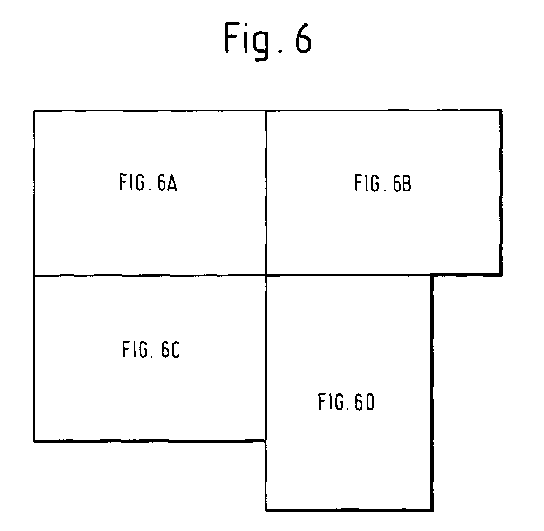

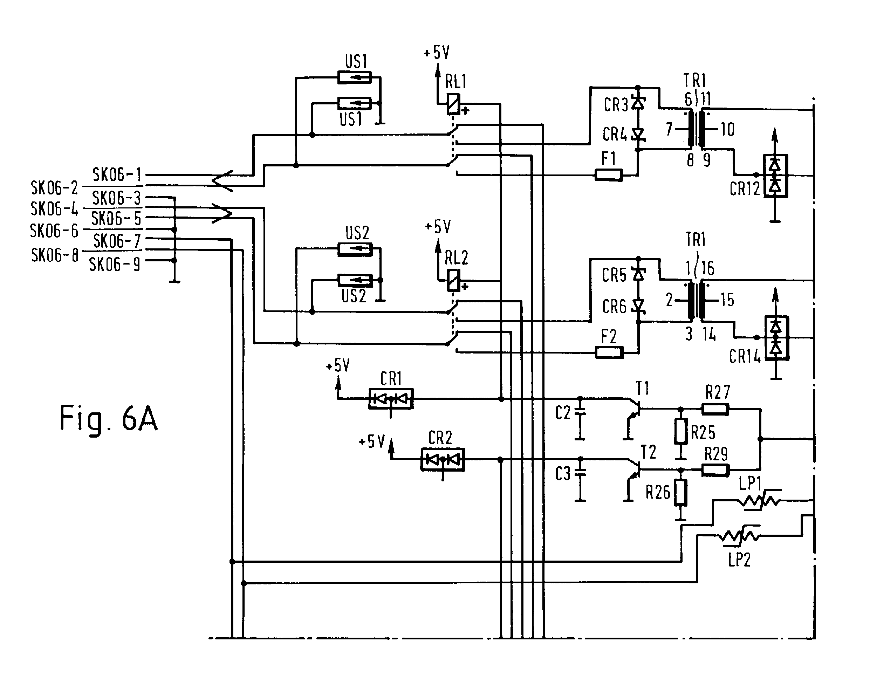

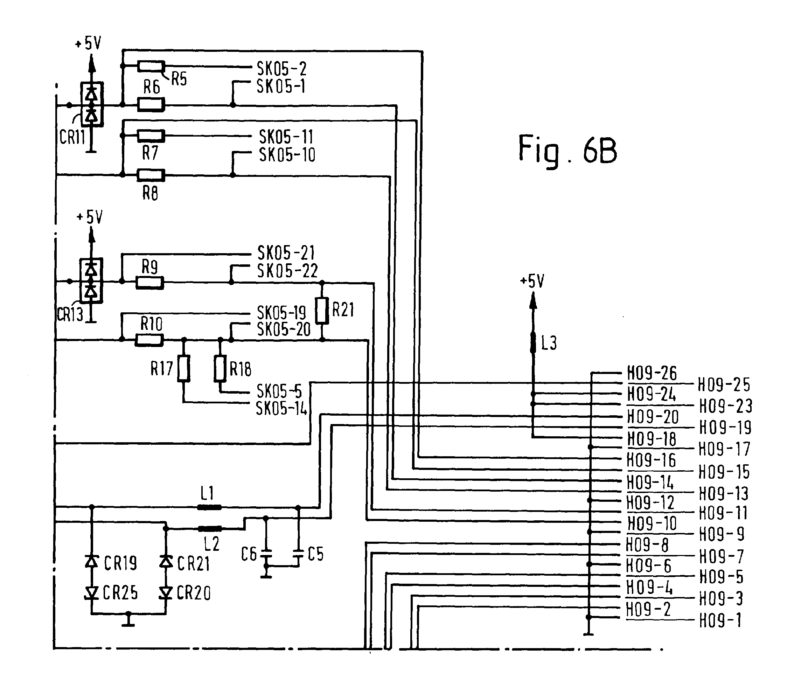

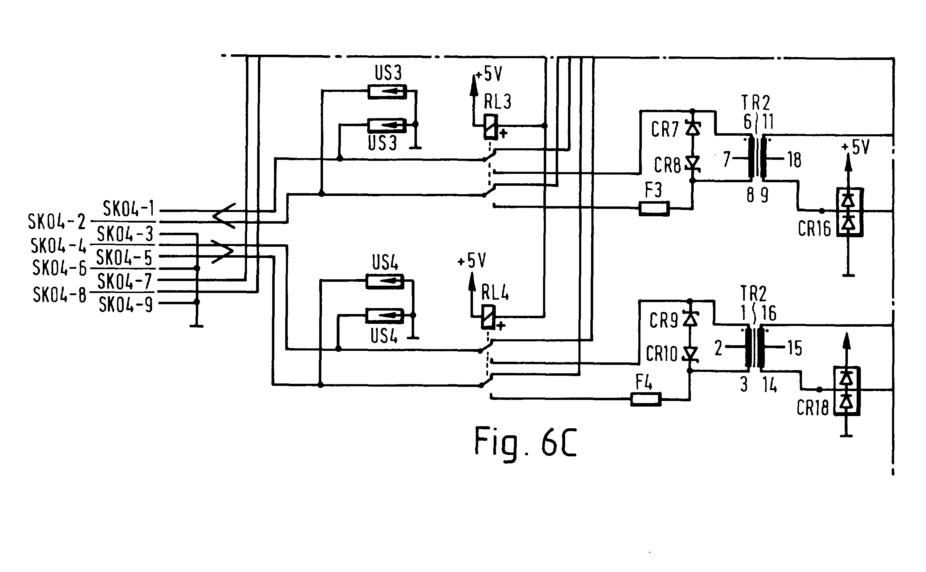

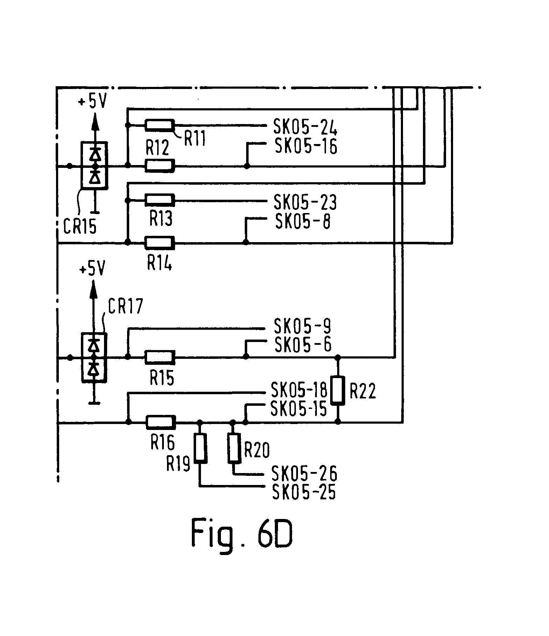

Figure 6 shows how Figures 6A, 6B, 6C and 6D assemble to provide a schematic circuit diagram of the interface unit of Figure 1.

Referring to the drawings, base station equipment comprises a radio unit 2 containing a transmitter 4, a power amplifier 6, a receiver 8, a duplexer 9, a signal processor other associated equipment (not shown) and a control processor 10 which has a main processor board 12 and an interface board 14. The interface board 14 contains all the interfaces necessary to connect the processor board to the outside world and is connected to the processor board by cable 16 and connector H09.

The interface board 14 is connected by uplink digital transmission lines to a land based telecommunications switching network (not shown) via D-type connector socket SK06, pins SK06-1 and SK06-2 being connected to a transmit transmission line via which signals are sent to the switching network. Pins SK06-4 and SK06-5 are connected to a receive transmission line via which signals are received from the switching network. Pins 7 and 8 receive clock signals and the remaining pins are grounded.

In order that two or more radio units can be daisy chained together, downlink connections are provided for one or more radio units via D-type connector SK04. Pins SK04-1 and SK04-2 are connected to a transmit transmission line via which signals are sent to the further radio unit(s) in the daisy chain. Pins SK04-4 and SK04-5 are connected to a receive transmission line via which signals are received from the further radio unit(s) in the chain. Pins 7 and 8 transmit clock signals and the remaining pins are grounded.

The data lines on pins SK06-1, SK06-2, SK06-4 and SK06-5 and SK04-1, SK04-2, SK04-4 and SK04-5, are protected by high voltage lighting protectors US1 to US4. The clock signals are connected straight through from SK06-7 and SK06-8 to SK04-7 and SK04-8. In order that radio units further on in the daisy chain are not put out of action in the event that this radio unit fails, relays RL1 to RL 4 are arranged to switch data lines on pins SK06-1, SK06-2, SK06-4 and SK06-5 through to pins SK04-1, SK04-2, SK04-4 and SK04-5, in the event of a fault being signalled on pin H09-25.

Low voltage surge protection is provided by fuses F1 to F4 and back to back zener diode pairs GR3 to GR10. DC isolation id provided by two transformers TR1 and two transformers TR2.

The data lines are clamped to 0 to +5v or -5 to Ov by diode pairs GR12 to GR18.

The impedance seen on the data lines at the connectors SK04 and SK06 is settable by configuring a network of resistors R5 to R22. The network is configured by interconnecting ports appearing on pins of a connector SK05.

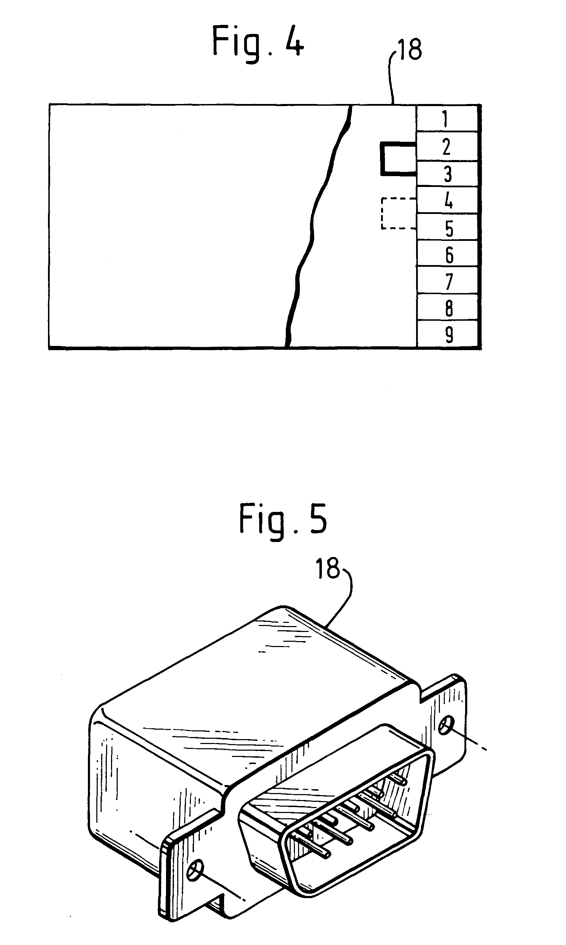

In the present embodiment impedance's of 75 ohms, 100 ohms and 120 ohms are provided. The interconnections are made by a configuration adapter 18 shown in Figures 4 and 5.

The adapter 18 has a D-type connector PL05 complimentary to SK05. Two or more of the pins are connected by internal links 20 in a pattern which identifies to the processor what impedance is required. It is preferable that one of the permissible patterns is not no connections at all so that if an installer forgets to connect an adapter a fault will register.

The adapter is conspicuously marked with an indication 68 of the impedance its use will select.

The interconnections needed to configure the resistor network to provide the different impedance's are shown in the following table:

| VARIANT | CONNECT PINS |
|---|---|
| E1-75 (75 ohms) | 21-22 |
| | 6-9 |
| | 19.20 |
| | 15-18 |
| | 5-23 |
| | 6-26 |
| | 12-13 |
| | 3-13 |
| T1-100 (100 ohms) | 1-2 |
| | 16-24 |
| | 10-11 |
| | 8-23 |
| | 21-22 |
| | 6-9 |
| | 19-20 |
| | 15-18 |
| | 12-13 |
| E-120 (120 ohms) | 14-22 |
| | 6-25 |
| | 3-13 |

Battery is connected to the processor board via a connector SK03 and cable 22.

## Claims

1. Base station equipment for a mobile telecommunications system, comprising an enclosure containing a radio transmitter, a radio receiver, and a processor for communicating with mobile terminals via the transmitter and receiver, and with a switching centre via a data link; a connector interface being provided as a unit separate from the processor, said interface having one or more connectors for connection to the data link, and conductive connections to the processor.

2. Base station equipment as claimed in claim 1, wherein the interface includes high voltage surge protection means between the connector(s) and the conductive connections to the processor.

3. Base station equipment as claimed in claim 1 or 2, wherein the interface includes low voltage surge protection means between the connector(s) and the conductive connections to the processor.

4. Base station equipment as claimed in any preceding claim, wherein the interface includes filter means between the connector(s) and the conductive connections to the processor.

5. Base station equipment as claimed in any preceding claim, wherein the interface includes electrical isolation means between the connector(s) and the conductive connections to the processor.

6. Base station equipment as claimed in claim 5, wherein the interface includes voltage clamping means between the isolation means and the conductive connections to the processor.
